# EUROPEAN PATENT APPLICATION

(11) **EP 4 057 667 A1**
(43) Date of publication of application: **14.09.2022**
(21) Application number: 20895762.1
(22) Date of filing: 22.10.2020
(51) Int. Cl.: H04W 24/02

(54) **METHOD FOR CONTROLLING ACTIVE ROOM DISTRIBUTION SYSTEM, ELECTRONIC DEVICE, AND STORAGE MEDIUM**

(30) Priority: 03.12.2019 CN 201911219557
(71) Applicant: ZTE Corporation, Shenzhen, Guangdong 518057 (CN)
(72) Inventor: WANG, Hao, Shenzhen, Guangdong 518057 (CN); XU, Falu, Shenzhen, Guangdong 518057 (CN)
(74) Representative: Raynor, Simon Mark
(86) International application number: PCT/CN2020/122941
(87) International publication number: WO 2021/109746

(57) **Abstract**

Embodiments of the present disclosure relate to the field of communications, and disclosed are a method for controlling an active indoor distribution system, an electronic device, and a storage medium. The method includes: acquiring service data of a network cell within a preset duration, where the service data characterizes a network condition of the network cell; powering on or powering off at least one redundant remote radio unit of the network cell according to the service data, where the at least one redundant remote radio unit refers to one or more remote radio units that are redundant relative to a second network among remote radio units provided for a first network. A network speed of the first network is greater than a network speed of the second network.

## Description

### CROSS REFERENCE TO RELATED APPLICATIONS

This application claims priority to Chinese patent application No. 201911219557.3, filed on December 3, 2019, which is hereby incorporated by reference in its entirety.

### TECHNIC FIELD

Embodiments of the present disclosure relate to the field of communication, and in particular, to a method for controlling an active indoor distribution system, an electronic device, and a storage medium.

### BACKGROUND

In 2^{nd} generation (2G) and 3^{rd} generation (3G) communication systems, conventional indoor distribution systems are generally used for indoor coverage, and the indoor distribution system adopts passive components such as combiners, power dividers, couplers, etc.. In other words, in the 2G and 3G communication systems, there is no demand on reduction of energy consumption. In the 4G era, the main business of terminal users has changed from voice-based services to data-based services. That is, conventional indoor distribution systems using distributed antenna system (DAS) are unable to fully meet needs of operators in the 4G era. Active indoor distribution systems are favored by the operators because of its features such as high capacity, full link monitoring, and smooth 5G evolution, and thus are widely deployed in the 4G era. Compared with the conventional passive DAS system, in the active indoor distribution system, a pico-remote radio unit bridge (pBridge) is powered by 220V AC, and a pico-remote radio unit (pRRU) is powered by the pBridge through the power over Ethenet (PoE), i.e., the pBridge supplies power to the pRRU through the network cable. Compared with the DAS system, more active components are provided in the active indoor distribution system, and the operators need to pay more electricity bills. Therefore, how to reduce energy consumption of the active indoor distribution system for the operators is a technical problem to be solved. In some cases, following manners can be used for reducing energy consumption: symbol shutdown, channel shutdown, carrier frequency shutdown, and pRRU timing power-on or power-off.

The inventor found that there are at least the following problems in the related technologies. The symbol shutdown, the channel shutdown, and the carrier frequency shutdown have limited effects on reducing energy consumption of the active indoor distribution system, and the pRRU timing power-on or power-off may lead to network coverage blank areas, which may reduce user experience.

### SUMMARY

Embodiments of the present disclosure aim to provide a method for controlling an active indoor distribution system, an electronic device, and a storage medium.

In some embodiments, a method for controlling an active indoor distribution system is provided. The method includes: acquiring service data of a network cell within a preset duration; where the service data characterizes a network condition of the network cell; powering on or powering off at least one redundant remote radio unit in the network cell; where, the at least one redundant remote radio units refers to one or more remote radio units that are redundant relative to a second network among remote radio units provided for the first network; where a network speed of the first network is greater than a network speed of the second network.

In some embodiments, an electronic device is further provided. The electronic device includes: at least one processor; and a memory communicatively connected to the at least one processor; where the memory stores instructions executable by the at least one processor, and the instructions, when executed by the at least one processor, cause the at least one processor to perform the above-described method for controlling the active indoor distribution system.

In some embodiments, a computer-readable storage medium is further provided. The computer-readable storage medium stores a computer program that, when executed by a processor, causes the processor to perform the above-mentioned method for controlling the active indoor distribution system.

### BRIEF DESCRIPTION OF THE DRAWINGS

One or more embodiments are illustrated with reference to figures in corresponding accompanying drawings, which do not constitute limitations on the embodiments.
FIG. 1 is a flowchart illustrating a method for controlling an active indoor distribution system according to a first embodiment of the present disclosure.
FIG. 2 is a schematic diagram illustrating a QCELL network architecture according to the first embodiment of the present disclosure.
FIG. 3 is a schematic diagram illustrating a network coverage grid according to the first embodiment of the present disclosure.
FIG. 4 is a flowchart illustrating a method for controlling an active indoor distribution system according to a second embodiment of the present disclosure.
FIG. 5 is a schematic diagram illustrating intelligent power-off according to the second embodiment of the present disclosure.
FIG. 6 is a schematic diagram illustrating intelligent power-on according to the second embodiment of the present disclosure.
FIG. 7 is a flowchart illustrating a method for controlling an active indoor distribution system according to a third embodiment of the present disclosure.
FIG. 8 is a schematic diagram illustrating a power-on process according to a third embodiment of the present disclosure.
FIG. 9 is a schematic diagram illustrating a power-off process according to the third embodiment of the present disclosure.
FIG. 10 is a schematic structural diagram illustrating an electronic device according to a fourth embodiment of the present disclosure.

### DETAILED DESCRIPTION OF THE EMBODIMENTS

In order to make objectives, technical solutions, and advantages of the embodiments of the present disclosure clearer, various embodiments of the present disclosure will be described in detail below with reference to accompanying drawings. However, those of ordinary skilled in the art could understand that, many technical details are provided in the various embodiments of the present disclosure for readers to better understand the present disclosure. However, even without these technical details and various changes and modifications based on the following embodiments, the technical solutions claimed in the present disclosure can also be realized. The following divisions of the various embodiments are for convenience of description, and should not constitute any limitation on the specific implementations of the present disclosure, and the various embodiments may be combined with each other and referred to each other in case of no contradiction.

A method for controlling an active indoor distribution system, an electronic device, and a storage medium are provided in embodiments of the present disclosure, which can intelligently power on or off remote radio units that need to be powered on or off according to a network condition, thereby ensuring network coverage and reducing energy consumption of the active indoor distribution system as much as possible.

A first embodiment of the present disclosure relates to a method for controlling an active indoor distribution system. In this embodiment, service data of a network cell within a preset duration is acquired. The service data characterizes a network condition of the network cell. At least one redundant remote radio unit of the network cell is powered on or off according to the service data. The at least one redundant remote radio unit refers to one or more remote radio units that are redundant relative to a second network among remote radio units provided for a first network, where a network speed of the first network is greater than a network speed of the second network. A network condition of the network cell is determined based on the acquired service data of the network cell, and the at least one redundant remote radio unit is powered on or powered off according to the network condition. With a second network as a coverage network, redundant remote radio units, when a second network coverage is implemented, are accurately determined from remote radio units provided for the first network as the coverage network. Whether the one or more redundant remote radio units are powered on or powered off is determined according to the network condition, which reduces energy consumption of the active indoor distribution system as much as possible and reduces cost of operators on a premise of ensuring the network coverage.

Implementation details of the method for controlling the active indoor distribution system of the present embodiment are described in detail below. The following contents are only provided for convenience of understanding, and are not necessary for implementing this solution.

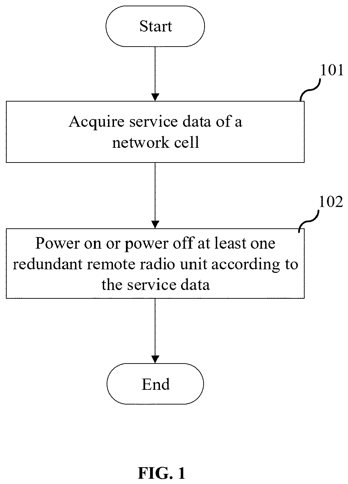

The specific process of the method for controlling the active indoor distribution system in embodiments is illustrated in FIG. 1, which includes following operations.

At 101, service data of a network cell is acquired.

Specifically, within a time period configured by operation and maintenance personnel to allow intelligent power-on and power-off, a self-organizing network (SON) function module acquires the service data of the network cell within the preset duration, where the service data characterizes a network condition of the network cell.

In one example, when intelligent managing of the active indoor distribution system is applied in a shopping mall, and a time period set by the operation and maintenance personnel to allow intelligent power-on and power-off in the shopping mall is from 10:00 pm to 10:00 am of a next day, starting from 10:00 pm, the SON module determines the number of user terminals and a traffic in each of a 4G network cell and a 5G network cell in the QCELL system (an active indoor distribution system) of the shopping mall with 0.5 hours (0.5h) as a basic time granularity, and determines the number of the user terminals and the traffic in each network cell within the 0.5h as the service data of the network cell.

In practical applications, the time period and the preset duration for allowing intelligent power-on and power-off may be determined according to the actual situation. There is no restriction on the setting of the time period and the preset duration for allowing the intelligent power-on and power-off.

At 102, the at least one redundant remote radio unit is powered on or powered off according to the service data.

Specifically, after acquiring the service data of the network cell within the preset duration, the SON module determines the network condition of the network cell according to the acquired service data, and determines an operation that needs to be performed on the at least one redundant remote radio unit of the network cell according to the network condition of the network cell, so as to power on or power off the at least one redundant remote radio unit of the network cell according to the service data. The at least one redundant remote radio unit refers to one or more remote radio units that are redundant relative to the second network as the coverage network, among the remote radio units provided for the first network as the coverage network. The network speed of the first network is greater than the network speed of the second network.

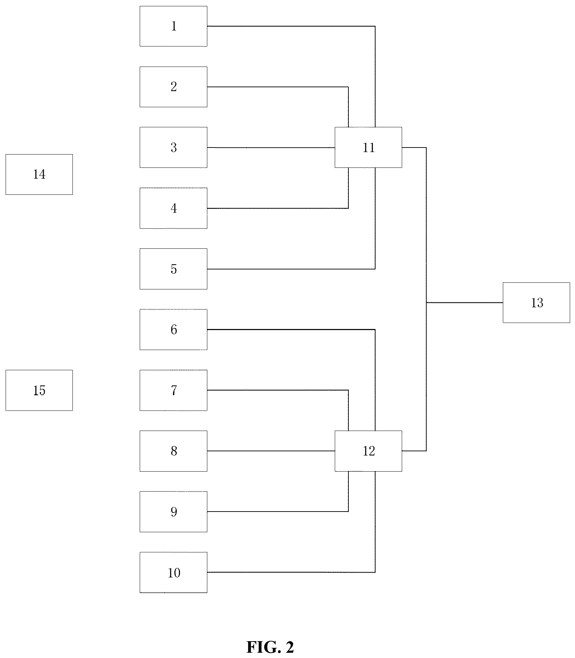

In one example, when the active indoor distribution system deploys the remote radio units, the remote radio units support a combination of multi-frequency and multi-mode. For example, in QCELL systems of China Telecom and China Unicom, the remote radio units not only support 5G carriers, but also support basic 4G carriers such as 1.8GHz and 2.1GHz, etc. A coverage capability of the 3.5GHz band of the 5G carrier is worse than that of the 1.8 GHz/2.1GHz band. In order to ensure continuous coverage of the 3.5GHz band, locations of the remote radio units are planned based on a coverage radius of the 3.5GHz of the 5G carrier during network planning. For the 1.8GHz/2.1GHz band in the 4G carriers, the remote radio units are relatively densely deployed, i.e., there may be redundant remote radio units on condition that 4G signal coverage is realized. A QCELL network architecture is illustrated in FIG. 2. Referring to FIG. 2, 1 to 10 represent ten remote radio units, which provide 3G/4G/5G signals with milliwatt power. 11 and 12 represent pBridges, which are connected to the remote radio units through network cables respectively, and supply power to the remote radio units through the PoE. The pBridge 11 and the pBridge 12 may be cascaded through optical fibers. 13 represents a base band unit (BBU), which is connected to the pBridges through optical fibers for 3G/4G/5G baseband signal processing. 14 and 15 represent user equipments (UEs) that support 3G/4G/5G, and communicates with the remote radio units through electrical signals. Therefore, the SON module uses the 4G network as a basic network coverage layer, and determines the at least one redundant remote radio unit as follows. A topological connection relationship between the remote radio units and a second network coverage grid map of each remote radio unit are obtained. A network coverage overlapped area in second network coverage grid maps is determined according to the topological connection relationship and the second network coverage grid maps. The at least one redundant remote radio unit is determined from the remote radio units within the network coverage overlapped area.

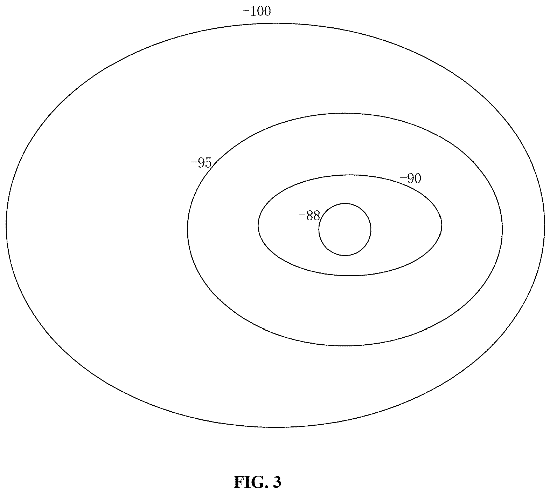

The SON module acquires the topological connection relationship between the remote radio units, and then acquires 4G MR (base station measurement report) data of the network cell collected by the BBU within a time period as a sample. The SON module extracts A pRRUIndex (an index of each remote radio unit) value and a reference signal receiving power (RSRP) value or an uplink channel quality measurement (e.g., sounding reference signal, SRS) field strength value from the MR data. Thereafter, the SON module generates, according to the extracted data, 4G coverage grid maps of different carrier frequency bands for each of the remote radio units, such as coverage grid maps of 4G bands of 850MHz, 1800MHz, and 2100MHz. The network coverage grid is illustrated in FIG. 3. With the remote radio unit as a center, affected by environmental factors and an increased distance from the remote radio unit, the remote radio unit may provide a signal of a corresponding strength within each specific range. After the 4G coverage grid maps of each remote radio unit are acquired, a 4G coverage grid map in a 4G frequency band of each remote radio unit is selected. For example, a 4G coverage grid map with a largest coverage among the 4G coverage grid maps is selected. Thereafter, the at least one redundant remote radio unit is determined by combining the topological connection relationship between the remote radio units. Before the at least one redundant remote radio unit is determined, a list pRRUSet1 including remote radio units that need to be reserved configured by the operation and maintenance personnel is first acquired. The list pRRUSet1 stores the remote radio units in an area where VIP user terminals are located or in key traffic areas, etc. The network coverage overlapped area in the 4G coverage grid maps is determined according to the 4G coverage grid maps of each remote radio unit and the topological connection relationship between the remote radio units. The at least one remote radio unit that is redundant relative to the 4G network coverage is selected and marked from the remote radio units in the network coverage overlapped area. That is, in multiple remote radio units in multiple 4G network coverage overlapped areas, at least one remote radio unit is reserved as a common remote radio unit, and remaining remote radio units are marked as redundant remote radio units. A list pRRUSet2 including remote radio units that may be powered off is generated according to the redundant remote radio units. Thereafter, remote radio units belonging to the list pRRUSet1 are removed from the list pRRUSet2, and a list pRRUSet3 is generated according to multiple remote radio units, where whether multiple remote radio units are redundant remote radio units cannot be determined. The multiple remote radio units in the list pRRUSet3 are further analyzed according to MR data acquired subsequently, where remote radio units that are determined as the redundant remote radio units are added to the list pRRUSet2, and common remote radio units are removed from the list pRRUSet3 until there is no remote radio unit in the list pRRUSet3.

In practical applications, during determining of the network coverage overlapped area, the second network coverage grid map may be selected according to actual situation, and there is no restriction on the selection of the second network coverage grid map.

The SON module determines the at least one redundant remote radio units in each of the network cells according to the acquired list pRRUSet2. After the service data of the network cell are acquired, it is detected whether the number of user terminals in the network cell is greater than a first preset threshold and whether the traffic of the network cell is greater than a second preset threshold. If the number of the user terminals is greater than the first preset threshold and the traffic is greater than the second preset threshold, the redundant remote radio units that have been powered off are powered on. If the number of the user terminals is not greater than the first preset threshold or the traffic is not greater than the second preset threshold, the redundant remote radio units that have not been powered off are powered off. For example, the first preset threshold is set to 50 and the second preset threshold is set to 3G. When it is detected that the number of the user terminals in a current network cell within 0.5h is less than 50 or a traffic of the current network cell within 0.5h is less than 3G and the redundant remote radio units in the network cell are in a power-on state, the redundant remote radio units in the network cell are powered off. When it is detected that the number of the user terminals of the current network cell within 0.5h is greater than 50 and the traffic of the current network cell within 0.5h is greater than 3G, and the redundant remote radio units in the network cell are in a power-off state, the redundant remote radio units in the network cell are powered on.

In practical applications, the first preset threshold and the second preset threshold may be set according to actual situation, and there is no restriction on the first preset threshold and the second preset threshold.

Therefore, a method for controlling the active indoor distribution system is provided in this embodiment. The network condition of the network cell is accurately determined by acquiring the service data of the network cell and according to the relationship between the number of the user terminals of the network cell within the preset duration and the first preset threshold as well as the traffic of the network cell within the preset duration and the second preset threshold. The redundant remote radio units of the network cell are determined to be powered on or powered off according to the network condition of the network cell, which may reduce energy consumption of the active indoor distribution system as much as possible while ensuring the network coverage. With the 4G network as the coverage network, when the 4G network coverage is realized, the at least one redundant remote radio unit among the remote radio units provided for the 5G network as the coverage network is determined according to the topological connection relationship between the remote radio units and the 4G coverage grid map of each of the remote radio units. In this way, after the redundant remote radio units are powered off according to the network condition, the requirements of the network coverage of the network cell can still be met, which may reduce energy consumption and ensure user experience.

In addition, a coverage overlapped area of the second network is determined according to the topological connection relationship between the remote radio units and the second network coverage grid map of each of the remote radio units, and the one or more redundant remote radio units are determined from remote radio units in the coverage overlapped area of the second network, so as to identify as many redundant remote radio units as possible on a premise of ensuring the network coverage.

Furthermore, the network condition of the current network cell is measured according to the relationship between the number of the user terminals in the network cell and the first preset threshold as well as the traffic in the network cell and the second preset threshold, such that the redundant remote radio unit may be powered on or powered off accurately according to the network condition, thereby reducing energy consumption of the active indoor distribution system while ensuring the network coverage of the network cell.

A second embodiment of the present disclosure relates to a method for controlling an active indoor distribution system. The second embodiment is substantially the same as the first embodiment. In the second embodiment, during determining of the redundant remote radio units, the redundant remote radio units are determined in combination with an outdoor network coverage situation to acquire as many the redundant remote radio units as possible, so that the energy consumption may be further reduced after the redundant remote radio units are powered off. After the redundant remote radio units are powered off, a first network carrier frequency of the remote radio unit is intelligently gated according to the network condition of the network cell, thereby further reducing the energy consumption.

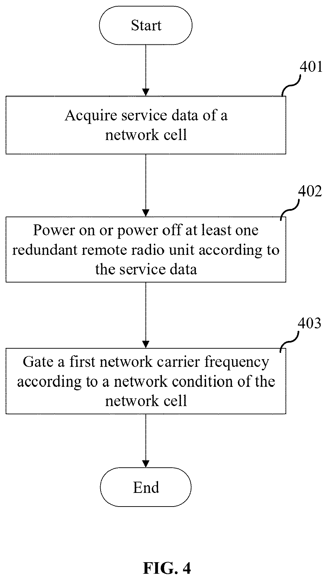

The specific flow of the method for controlling the active indoor distribution system in the embodiment is illustrated in FIG. 4, which includes following operations.

At 401, service data of a network cell is acquired.

Operations at 401 in the second embodiment is similar to operations at 101 in the first embodiment, which are not repeated herein.

At 402, the at least one redundant remote radio unit is powered on or powered off according to the service data.

Specifically, after the service data of the network cell within a preset duration is acquired, a SON module powers on or powers off the at least one redundant remote radio unit according to the network condition corresponding to the service data, where the at least one redundant remote radio unit refers to multiple remote radio units within a second network coverage overlapped area.

In one example, an outdoor 5G active antenna unit (AAU), i.e., an integrated active antenna, is also deployed around a building where the active indoor distribution system is deployed. The AAU of mainstream manufacturers supports multiple 5G beams (the AAU of China Telecom or China Unicom with 3.5GHz band supports up to 8 5G beams), e.g., beam 1 to beam m, where each of the beams may cover different space areas. Beam configuration of the AAU in a deployment phase is specified by network planners. For a high-rise building, the number of beams covering lower floors is different from the number of beams covering upper floors. Since the SON module may be deployed in the 5G network, during network operation, the SON module may dynamically adjust beam properties, including power of the beam, a direction angle of the beam, and a beam width, according to the network condition. A list pRRUSet2 including remote radio units that may be powered off in a QCELL system may be determined in combination with beams of the outdoor AAU. For example, if the beam of the outdoor AAU can cover an indoor window area, remote radio units deployed in the window area in the active indoor distribution system are also added to the list pRRUSet2.

At 403, a first network carrier frequency is gated according to the network condition of the network cell.

Specifically, after the redundant remote radio units of the network cell are powered off, an updated number of user terminals and an updated traffic of the network cell within the preset duration are acquired once again. The first network carrier frequency of the network cell is turned on or off according to the updated number of user terminals and the updated traffic.

In one example, after the redundant remote radio units that have not been powered off in the network cell are powered off, a terminal registration message of the network cell within the preset duration is acquired during turning on the first network carrier frequency of the network cell according to the updated number of the user terminals and the updated traffic. It is detected whether the terminal registration message includes a first network terminal registration message, whether the updated number of the user terminals of the network cell is greater than a third preset threshold, and whether the updated traffic is greater than a fourth preset threshold. If the terminal registration message includes the first network terminal registration message, the updated number of user terminals is greater than the third preset threshold, and the updated traffic is greater than the fourth preset threshold, the first network carrier frequency that has been turned off in the network cell is turned on. The third preset threshold is less than the first preset threshold, and the fourth preset threshold is less than the second preset threshold.

The network condition of the network cell is determined by detecting the terminal registration message, the number of user terminals, and the traffic of the network cell. When it is determined that the first network carrier frequency needs to be turned on, the first network carrier frequency is turned on to ensure network coverage.

In another example, after the redundant remote radio units that have not been powered off in the network cell are powered off, during determining whether the first network carrier frequency of the network cell is turned off according to the updated number of the user terminals and the updated traffic, it is detected whether the updated number of the user terminals is greater than the third preset threshold and whether the updated traffic is greater than the fourth preset threshold. If the updated number of the user terminals is not greater than the third preset threshold or the updated traffic is not greater than the fourth preset threshold, the first network carrier frequency of the network cell is turned off.

According to the relationship between the updated number of the user terminals and the third preset threshold as well as the updated traffic and the fourth preset threshold, the network condition of the network cell can be accurately determined. When it is determined that the network cell does not need the first network carrier frequency, the first network carrier frequency is turned off to further reduce energy consumption of the active indoor distribution system.

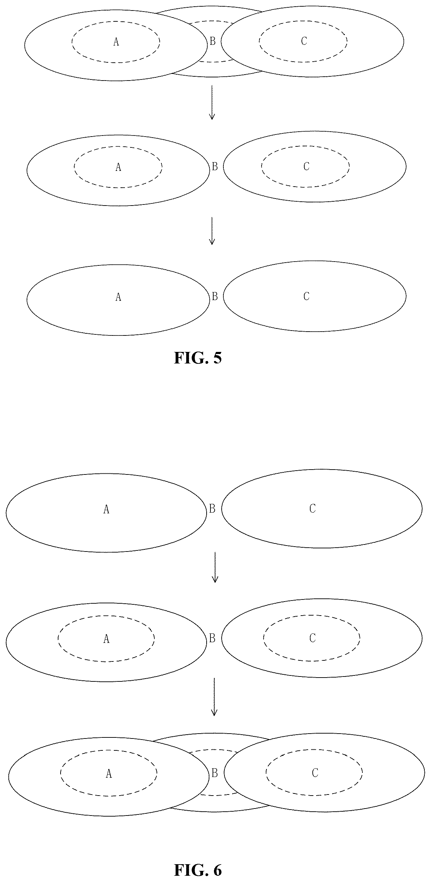

For example, the network cell includes three remote radio units A, B, and C, where B is a redundant remote radio unit. The schematic diagram of intelligent power-off is illustrated in FIG. 5. Referring to FIG.5, a dotted circle indicates a 5G coverage area, and a solid circle indicates a 4G coverage area. During power-off, the SON module acquires the number of the user terminals and the traffic of the network cell within half an hour. When it is detected that the number of the user terminals is less than 60 and the traffic is less than 4G, it is determined that the redundant remote radio unit needs to be powered off. In this case, the SON module cuts off power supply to the remote radio unit B and only reserves power supply to the remote radio units A and C. After the redundant radio unit is powered off, service data of the network cell within half an hour is acquired once again. When it is detected that the updated number of the user terminals is less than 30 and the traffic is less than 3G, or the updated number of the user terminals is less than 30 and the traffic is less than 3G, 5G carrier frequencies of the two remote radio units A and C are turned off. After the 5G carrier frequencies of the two remote radio units A and C are turned off, when it is detected that the number of the user terminals is more than 30, the traffic is more than 3G, and the registration message of the network cell includes a registration message of a 5G terminal, the 5G carrier frequencies of the two remote radio units A and C are turned on. The schematic diagram of intelligent power-on is illustrated in FIG. 6. A power-on process is a reverse process of the power-off process, which is not repeated herein.

In practical applications, the third preset threshold and the fourth preset threshold may be adjusted and set according to actual situations. There is no restriction on settings of the third preset threshold and the fourth preset threshold.

According to the method for controlling the active indoor distribution system provided herein, during determining of the redundant remote radio units, the determination of the redundant remote radio units is carried out in combination with an outdoor network coverage situation to acquire as many redundant remote radio units as possible. After the redundant remote radio units in the network cell are powered off, a current network condition of the network cell is re-acquired, and whether the first network carrier frequency of the remote radio units of the network cell is gated is determined according to the relationship between the number of the user terminals and the third preset threshold as well as the traffic and the fourth preset threshold, so as to reduce energy consumption of the active indoor distribution system as much as possible while meeting the requirements of network coverage.

The network condition of the network cell after the redundant remote radio units are powered off is detected continually, and the first network carrier frequency is gated according to the network condition of the network cell, thereby further reducing the energy consumption of the active indoor distribution system.

A third embodiment of the present disclosure relates to a method for controlling an active indoor distribution system. The third embodiment is substantially similar to the second embodiment. In the third embodiment, after at least one redundant remote radio unit of a network cell is powered on or off, network performance data of the network cell is acquired. The at least one redundant remote radio unit that has been powered on or powered off is rolled back according to a change of a network performance of the network cell, so as to ensure to power off as many redundant remote radio units as possible, to reduce energy consumption and avoid network performance degradation caused by powering off the redundant remote radio units.

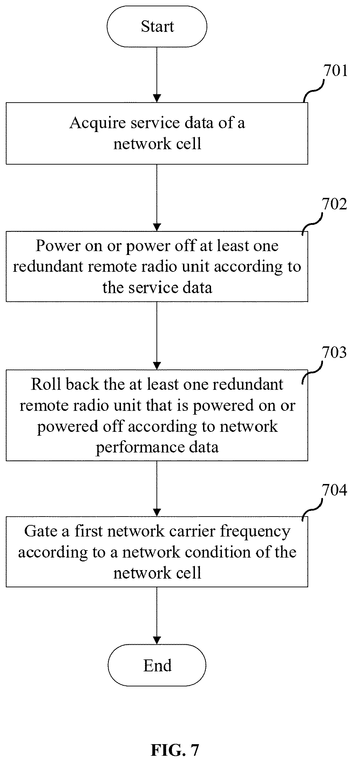

The specific flow of the method for controlling the active indoor distribution system in embodiments is illustrated in FIG. 7, which includes following operations.

At 701, service data of the network cell is acquired.

At 702, redundant remote radio units are powered on or powered off according to the service data.

Operations at 701 and 702 in the third embodiment are similar to operations at 401 and 402 in the second embodiment, which are not repeated herein.

At 703, the redundant remote radio units that have been powered on or powered off are rolled back according to network performance data.

Specifically, after the redundant remote radio units are powered on or powered off according to the service data of the network cell, the network performance data of the network cell are acquired, and current network coverage and network performance of the network cell are evaluated. According to a change of the network performance of the network cell, the redundant remote radio units that have been powered off are powered on again or the redundant remote radio units that have been powered on are powered off again.

In one example, after the redundant remote radio units in the network cell are powered off according to the acquired service data, network performance data of a first target network cell are acquired. The first target network cell is a network cell to which the redundant remote radio units that are powered off belong. Whether network performance of the first target network cell is degraded is determined according to the network performance data. If the network performance is degraded, the redundant remote radio units that have been powered off in the first target network cell are powered on again. Furthermore, when the redundant remote radio units that have been powered off in the first target network cell are powered on again, a network weak coverage area of the first target network cell is determined according to the network performance data. The network weak coverage area is an area where the network performance of the first target network cell is degraded. Thereafter, the redundant remote radio units that have been powered off in the network weak coverage area are powered on.

Whether the network performance of the network cell is degraded after the redundant remote radio units are powered off is determined by acquiring the network performance data of the network cell. When it is determined that the network performance is degraded, the redundant remote radio units that have been powered off are powered on again to ensure that network coverage requirements of the network cell are met.

The area where the network performance in the network cell is degraded is determined based on the acquired network performance data, and the redundant remote radio units in the area where the network performance is degraded are powered on again, so as to ensure good network coverage and reduce the energy consumption of the active indoor distribution system as much as possible.

For example, after the redundant remote radio units are powered off in the network cell, the SON module acquires current network performance (e.g., key performance indicator, KPI) data of the network cell, and determines a terminal-network-handover failure rate, a terminal-access-network success rate, a terminal radio link failure (RLF) message, a service bearer link, such as, evolved radio access bearer (ERAB), establishment success rate, and other data of the network cell. It is determined whether the network performance of the network cell deteriorates according to a change of the network performance data of the network cell after the redundant remote radio units are powered off. When it is determined that the network performance deteriorates, the SON module determines a list of UEs in the network cell that cause the change of the network performance (KPI) data according to acquired call detail tracking (CDT) data, and then determines MR grid information corresponding to each UE from a MR grid database according to information of each UE in the list of the UEs. Thereafter, the network weak coverage area in the network cell where the network performance is degraded may be determined, and the redundant remote radio units that have been powered off in the network weak coverage area are determined and are powered on again.

In practical applications, during powering on of the redundant remote radio units in the network weak coverage area of the active indoor distribution system, the determination of the redundant remote radio units may also be carried out in combination with a coverage area of beams of the outdoor AAU. After the network weak coverage area of the active indoor distribution system is determined, it is detected whether the outdoor AAU may achieve a good network coverage to the network weak coverage area. If the beams of the outdoor AAU may achieve the good network coverage to the network weak coverage area of the active indoor distribution system, the redundant remote radio units in an area where good network coverage can be provided by the outdoor AAU may not be powered on.

In another example, after the redundant remote radio units in the network cell are powered on according to the acquired service data, current network performance data of a second target network cell are acquired. The second target network cell is a network cell to which the redundant remote radio units that are powered on belong. Whether network performance of the second target network cell is improved is determined according to the current network performance data. If the network performance of the second target network cell is not improved, the redundant remote radio units of the second target network cell are powered off again.

By comparing the network performance of the network cell before and after the remote radio units are powered on, it is determined whether the redundant remote radio units that are powered on affect the network performance of the network cell. The redundant remote radio units that are unable to improve the network performance are powered off again to reduce energy consumption of the active indoor distribution system as much as possible.

For example, after the redundant remote radio units are powered on, the SON module acquires the network performance (e.g., KPI) data of the network cell, and determines a terminal-network-handover failure rate, a terminal-access-network success rate, a terminal RLF message, an ERAB establishment success rate, and other data of the network cell. The SON module determines whether the network performance of the network cell is improved after the redundant remote radio units are powered on. When it is determined that the network performance of the network cell is improved, current redundant remote radio units are removed from a list of remote radio units that may be powered off. When the network performance of the network cell is not improved, the current redundant remote radio units that are powered on are powered off again.

In practical applications, any one or any combination of following network performance (e.g., KPI) data may be acquired according to actual situation: the terminal-network-handover failure rate, the terminal-access-network success rate, the terminal RLF message, and the ERAB establishment success rate, etc. There is no restriction on the selection of the network performance (e.g., KPI) data.

At 704, a first network carrier frequency is gated according to the network condition of the network cell.

Operations at 704 in this embodiment is similar to operations at 403 in the second embodiment, which are not repeated herein.

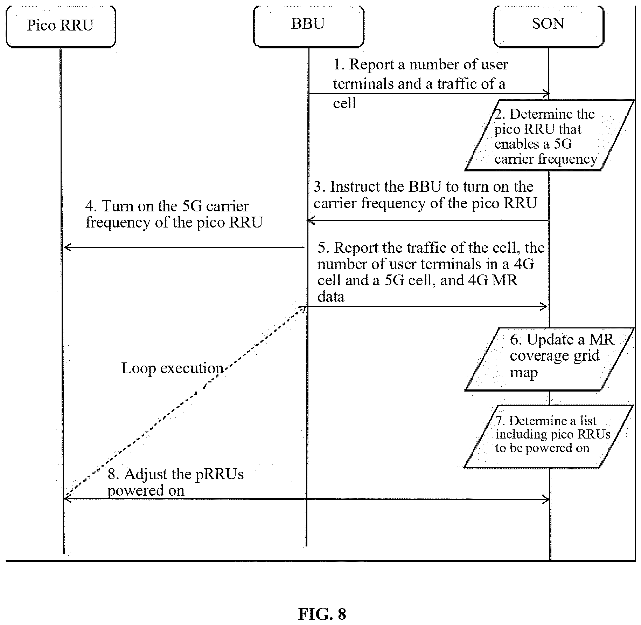

Therefore, a control process for the active indoor distribution system includes an intelligent power-on process and an intelligent power-off process. The intelligent power-on process is illustrated in FIG. 8. At an initial stage, the redundant remote radio units are powered off, and each of the remote radio units only enables 4 carrier frequencies. In operation 1, the SON module acquires the number of user terminals and a traffic of each network cell reported by the BBU. In operation 2, a list of remote radio units with 5G carrier frequencies to be enabled is determined according to the acquired service information. In operation 3, an instruction is sent to the BBU according to the list of the remote radio units with the 5G carrier frequencies to be enabled. In operation 4, the BBU turns on the 5G carrier frequencies of each of the remote radio units in the list of the network cell according to a received message. In operation 5, the SON module acquires the service data and MR data of the network cell after the RRUs are updated. In operation 6, 4G network coverage condition and network performance data are updated. In operation 7, a list of redundant remote radio units to be powered on is determined according to the updated data. In operation 8, the redundant remote radio units to be powered on are powered on, service data and performance data of the network cell are fed back again, and the redundant remote radio units powered on are adjusted.

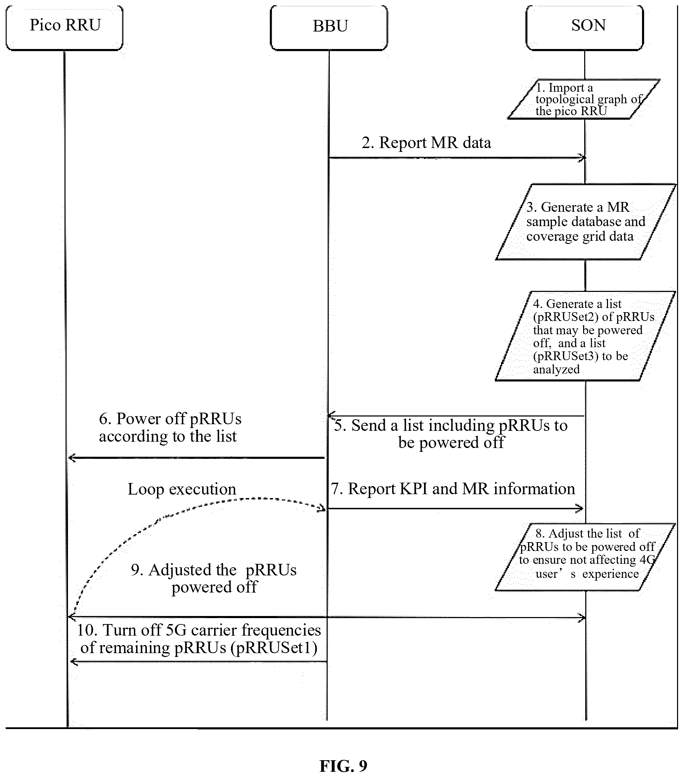

The intelligent power-off process is illustrated in FIG. 9. At an initial stage, 4G and 5G network carrier frequencies are simultaneously enable for each of remote radio unit. In operation 1, the SON module acquires a topology connection relationship between the remote radio units in the active indoor distribution system. In operation 2, the SON module acquires MR data from the BBU. In operation 3, a MR sample database and coverage grid data are generated according to acquired data. In operation 4, a list of remote radio units that may be powered off and a list of remote radio units to be analyzed are generated. In operation 5, a list of the remote radio units to be powered off is sent to the BBU. In operation 6, the BBU powers off the remote radio units in the list of the remote radio units to be powered off according to a received message. In operation 7, the BBU reports the network performance (e.g., KPI) data and the MR data in the network cell. In operation 8, the SON module adjusts the list of remote radio units that may be powered off according to received data information. In operation 9, the remote radio units to be powered off is adjusted according to an adjusted list of remote radio units that may be powered off, and the network performance (e.g., KPI) data and the MR data are re-uploaded, and the list of remote radio units that may be powered off is updated. In operation 10, the 5G carrier frequencies of the remote radio units are gated according to the network condition of the network cell.

Therefore, a method for controlling the active indoor distribution system is provided in this embodiment. After the redundant remote radio units are powered on or powered off according to the service data of the network cell, the change of the network performance of the network cell is detected. The redundant remote radio units that reduces the network performance of the network cell after being powered off are powered on again and the redundant remote radio units that are unable to improve the network performance of the network cell after being powered on are powered off again, so as to power off as many redundant remote radio units as possible to further reduce energy consumption of the active indoor distribution system while ensuring good network performance. When the redundant remote radio units need to be powered on, the network weak coverage area of the network cell is determined according to the network performance data, and only redundant remote radio units in the network weak coverage area are powered on, so as to power on as few remote radio units as possible and avoid increasing energy consumption of the active indoor distribution system.

The operations of the above various methods are divided only for purpose of describing clearly, and may be combined into one operation or some operations may be split into multiple operations during implementation. As long as the same logical relationship is included, they shall fall within the protection scope of the present disclosure. Adding unnecessary modifications or introducing unnecessary designs to an algorithm or process without changing the core design of the algorithm and process are all within the protection scope of the present disclosure.

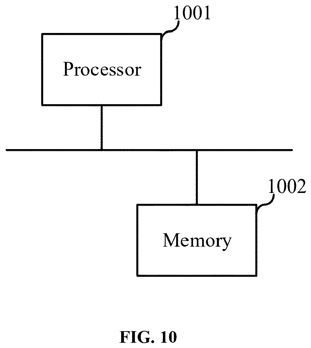

A fourth embodiment of the present disclosure relates to an electronic device. As illustrated in FIG. 10, the electronic device includes at least one processor, and a memory in communication with the at least one processor. The memory stores instructions executable by the at least one processor. The instructions, when executed by the at least one processor, cause the at least one processor to perform the above-mentioned method for controlling the active indoor distribution system.

The memory and the at least one processor are connected by a bus, and the bus may include any number of interconnected buses and bridges, and the bus connects various circuits of one or more processors and the memory. The bus may also connect together various other circuits, such as peripheral devices, voltage regulators, and power management circuits, which are well known in the art and therefore will not be described further herein. A bus interface provides an interface between the bus and a transceiver. The transceiver may be a single element or multiple elements, such as multiple receivers and transmitters, which is provided as a unit for communicating with various other devices over a transmission medium. Data processed by the processor is transmitted over a wireless medium through an antenna, and further, the antenna also receives data and then transmits the data to the processor.

The processor is configured to manage the bus and general processing, and may also provide various functions, including timing, peripheral interface, voltage regulation, power management, and other control functions. The memory may be configured to store data used in performing operations by the processor.

A fifth embodiment of the present disclosure relates to a computer-readable storage medium storing computer programs that, when executed by at least one processor, cause the at least one processor to perform the method in the foregoing embodiments.

That is, those skilled in the art would understand that all or part of the operations in the method for performing the above embodiments may be completed by instructing a relevant hardware through programs. The programs may be stored in a storage medium and includes several instructions to enable a device (which may be a single chip microcomputer, a chip, etc.) or a processor to perform all or part of the operations of the methods described in the various embodiments of the present disclosure. The aforementioned storage medium includes: a U disk, a mobile hard disk, a read-only memory (ROM), a random-access memory (RAM), a magnetic disk, optical disk, or other mediums that can store program codes.

In the embodiment of the present disclosure, whether redundant remote radio units in a network cell are powered on or powered off is determined according to the acquired service data of the network cell within the preset duration. The redundant remote radio units refer to remote radio units that are redundant relative to a second network among remote radio units provided for a first network. With the second network as the coverage network, the redundant remote radio units, when a second network coverage is implemented, are accurately determined among the remote radio units provided for the first network as the coverage network. The current network condition of the network cell is determined according to the acquired service data of the network cell. It is determined that the redundant remote radio units of the network cell need to be powered on or powered off according to the current network condition, so as to reduce energy consumption of the active indoor distribution system as much as possible while ensuring network coverage of the network cell, thereby ensuring user experience and reducing cost of operators.

Those of ordinary skill in the art may understand that the above-mentioned embodiments are specific examples for realizing the present disclosure, and in practical applications, various changes can be made in form and details without departing from the spirit and scope of the present disclosure.

## Claims

1. A method for controlling an active indoor distribution system, comprising:
acquiring service data of a network cell within a preset duration; wherein the service data characterizes a network condition of the network cell; and
powering on or powering off at least one redundant remote radio unit of the network cell according to the service data; wherein
the at least one redundant remote radio unit refers to one or more remote radio units that are redundant relative to a second network among remote radio units provided for a first network, wherein a network speed of the first network is greater than a network speed of the second network.

2. The method according to claim 1, further comprising:
before acquiring the service data of the network cell within the preset duration:
acquiring a topological connection relationship between the remote radio units provided for the first network and a respective second network coverage grid map of each of the remote radio units;
determining a network coverage overlapped area in the respective second network coverage grid map of each of the remote radio units according to the topological connection relationship and the respective second network coverage grid map of each of the remote radio units; and
determining redundant remote radio units among a plurality of remote radio units within the network coverage overlapped area.

3. The method according to claim 1, wherein powering on or powering off the at least one redundant remote radio unit of the network cell according to the service data comprises:
detecting whether a number of user terminals of the network cell is greater than a first preset threshold and whether a traffic of the network cell is greater than a second preset threshold;
powering on the at least one redundant remote radio unit that is powered off, in response to the number of the user terminals being greater than the first preset threshold and the traffic being greater than the second preset threshold; and
powering off the at least one redundant remote radio unit that is not powered off, in response to the number of the user terminals being not greater than the first preset threshold or the traffic being not greater than the second preset threshold.

4. The method according to claim 3, further comprising:
after powering off the at least one redundant remote radio unit that is not powered off:
acquiring an updated number of user terminals and an updated traffic of the network cell within another preset duration; and
turning on or turning off at least one first network carrier frequency of the network cell according to the updated number of the user terminals and the updated traffic.

5. The method according to claim 4, wherein turning on the at least one first network carrier frequency of the network cell according to the updated number of the user terminals and the updated traffic comprises:
acquiring a terminal registration message of the network cell within the preset duration;
detecting whether the terminal registration message comprises a first network terminal registration message, whether the updated number of the user terminals of the network cell is greater than a third preset threshold, and whether the updated traffic is greater than a fourth preset threshold; and
turning on the at least one first network carrier frequency of the network cell that is turned off, in response to the terminal registration message comprising the first network terminal registration message, the updated number of the user terminals being greater than the third preset threshold, and the updated traffic being greater than the fourth preset threshold; wherein
the third preset threshold is less than the first preset threshold, and the fourth preset threshold is less than the second preset threshold.

6. The method according to claim 4, wherein turning off the at least one first network carrier frequency of the network cell according to the updated number of the user terminals and the updated traffic comprises:
detecting whether the updated number of the user terminals of the network cell is greater than a third preset threshold, and whether the updated traffic is greater than a fourth preset threshold; and
turning off the at least one first network carrier frequency of the network cell, in response to the updated number of the user terminals being not greater than the third preset threshold or the updated traffic being not greater than the fourth preset threshold.

7. The method according to any one of claims 1 to 3, further comprising:
after powering on or powering off the at least one redundant remote radio unit of the network cell:
acquiring network performance data of a first target network cell; wherein the first target network cell is a network cell to which the at least one redundant remote radio unit that is powered off belong;
determining whether network performance of the first target network cell is reduced according to the network performance data; and
powering on the at least one redundant remote radio unit that is powered off in the first target network cell, in response to the network performance being reduced.

8. The method according to claim 7, wherein powering on the at least one redundant remote radio unit that is powered off in the first target network cell comprises:
determining a network weak coverage area of the first target network cell according to the network performance data; wherein the network weak coverage area is an area where the network performance is reduced in the first target network cell; and
powering on the at least one redundant remote radio unit that is powered off in the network weak coverage area.

9. The method according to any one of claims 1 to 3, further comprising:
after powering on or powering off the at least one redundant remote radio unit of the network cell:
acquiring current network performance data of a second target network cell; wherein, the second target network cell is a network cell to which the at least one redundant remote radio unit that is powered on belong;
determining whether network performance of the second target network cell is improved according to the current network performance data; and
powering off the at least one redundant remote radio unit of the second target network cell in response to the network performance being not improved.

10. An electronic device, comprising:
at least one processor; and,
a memory in communication with the at least one processor;
wherein, the memory stores instructions executable by the at least one processor, and the instructions, when executed by the at least one processor, cause the at least one processor to perform the method of any one of claims 1 to 9.

11. A computer-readable storage medium storing a computer program that, when executed by a processor, causes the processor to perform the method of any one of claims 1 to 9.
